# EUROPÄISCHE PATENTSCHRIFT

(11) **EP 2 733 698 B1**
(45) Veröffentlichungstag und Bekanntmachung des Hinweises auf die Patenterteilung: **14.09.2016**
(21) Anmeldenummer: 13191448.3
(22) Anmeldetag: 04.11.2013
(51) Int. Cl.: G10L 17/26

(54) **Vorrichtung zur Übertragung und zur Darstellung von Darstellungsinformationen**
Apparatus for communicating and for displaying information
Dispositif de transmission et de représentation d'information de représentation

(30) Priorität: 14.11.2012 DE 102012022250
(43) Veröffentlichungstag der Anmeldung: 21.05.2014
(73) Patentinhaber: Deutsche Telekom AG, 53113 Bonn (DE)
(72) Erfinder: Sinning, Thorsten, 52080 Aachen (DE)
(74) Vertreter: Schwöbel, Thilo K.

(56) Entgegenhaltungen:
- WO-A1-2011/000113
- US-A1- 2007 280 644

## Beschreibung

### Stand der Technik

Die Erfindung betrifft eine Vorrichtung zur Übertragung und zur Darstellung von Darstellungsinformationen, wobei die Vorrichtung mindestens eine Mikrofoneinrichtung und eine Steuereinheit aufweist, wobei die Mikrofoneinrichtung so konfiguriert ist, dass sie externe Luftschallwellen in ein durch die Steuereinheit auswertbares Akustiksignal umsetzt, wobei in einer der Vorrichtung wenigstens zugeordneten Speichereinrichtung ein Mustersignal eines akustischen Signals hinterlegt ist.

Die Erfindung betrifft ferner auch ein System mit einer erfindungsgemäßen Vorrichtung, wobei das System ein elektrisches Gerät aufweist, wobei das elektrische Gerät eine der Datenschnittstelle der Vorrichtung entsprechende weitere Datenschnittstelle aufweist und wobei das elektrische Gerät ferner eine Anzeigeeinrichtung und einen Untertitelgenerator aufweist.

Weiterhin betrifft die Erfindung auch ein Verfahren zur Übertragung und zur Darstellung von Darstellungsinformationen, wobei eine Vorrichtung wenigstens eine Mikrofoneinrichtung und eine Steuereinheit aufweist, wobei durch die Mikrofoneinrichtung externe Luftschallwellen in ein durch die Steuereinheit auswertbares Akustiksignal umgesetzt werden, wobei in einer der Vorrichtung wenigstens zugeordneten Speichereinrichtung ein Mustersignal eines akustischen Signals hinterlegt ist.

Ferner betrifft die Erfindung auch ein Computerprogramm mit Programmcodemitteln und ein Computerprogrammprodukt.

Die Übertragung und/oder die Darstellung von Darstellungsinformationen mittels einer hierfür vorgesehenen Vorrichtung ist allgemein bekannt. Beispielsweise ist aus der japanischen Patentveröffentlichung JP 2004-304531 A "Information Display apparatus, information display method and program therefore" eine Vorrichtung bekannt, um die Schriftgröße von Untertiteln, die in ein Fernsehprogramm eingeblendet werden, in Abhängigkeit von dem Umgebungsgeräuschpegel zu variieren.

Eine spezifischere Reaktion auf Ereignisse in der Umgebung eines ein Fernsehgerät betreibenden Benutzers ist damit jedoch nicht möglich.

WO 2011/000113 A1 offenbart ein System, das optisch über Geräusche informiert.

### Offenbarung der Erfindung

Der Erfindung liegt die Aufgabe zugrunde, eine Vorrichtung zur Übertragung und zur Darstellung von Darstellungsinformationen bereitzustellen, die die Nachteile des Standes der Technik überwindet oder zumindest maßgeblich reduziert und in einfacher Weise eine Möglichkeit bereitstellt, Umgebungsgeräusche bzw. Sprachsignale bzw. allgemein Schallwellen im Umfeld der Vorrichtung derart zu erfassen und zu verarbeiten, dass mittels einer Mustererkennung eine Zuordnung zu einer oder mehreren Kategorien von Geräuschen bzw. Sprachsignalen bzw. allgemein Schallwellen ermöglicht wird und eine adäquatere bzw. angemessenere Reaktion veranlasst wird.

Diese Aufgabe wird erfindungsgemäß gelöst durch eine Vorrichtung gemäß Anspruch 1.

Es ist hierdurch gemäß der vorliegenden Erfindung in vorteilhafter Weise möglich, dass in Abhängigkeit eines Vergleichs bzw. eines Ergebnisses eines Vergleichs des (aus den bezüglich der Mikrofoneinrichtung externen Luftschwingungen bzw. Schallwellen abgeleiteten) Akustiksignals mit einem Mustersignal, welches einem akustischen Signal zugeordnet ist, ein Steuersignal generiert wird, wobei in Abhängigkeit des Steuersignals bei positivem Vergleich des Akustiksignals mit dem Mustersignal
-- auf der Anzeigeeinrichtung der Vorrichtung eine dem Mustersignal zugeordnete Darstellungsinformation angezeigt wird, und
-- die dem Mustersignal zugeordnete Darstellungsinformation in einer zur Ausgabe mittels eines Untertitelgenerators angepassten Art ausgegeben wird.

Erfindungsgemäß muss folglich in einem ersten Schritt in die in der Vorrichtung entweder integrierten oder aber zumindest der Vorrichtung zugeordneten Speichereinrichtung das Mustersignal eingespeichert werden, so dass beim Betrieb der Vorrichtung im Rahmen des Vergleichs des Akustiksignals mit dem Mustersignal, erkannt werden kann, dass das den bezüglich der Mikrofoneinrichtung externen Schallwellen entsprechende Akustiksignal tatsächlich dem Mustersignal entspricht bzw. eine ausreichend große Ähnlichkeit mit diesem aufweist; dass mithin der Vergleich positiv ausfällt.

Eine solche Überprüfung bzw. ein solcher Vergleich des Akustiksignals mit dem Mustersignal kann erfindungsgemäß in besonders vorteilhafter Weise beispielsweise mittels einer Korrelationsberechnung durchgeführt werden. Hierdurch ist es erfindungsgemäß vorteilhaft möglich, den Grad der Übereinstimmung bzw. einen Ähnlichkeitsgrad zwischen dem Mustersignal einerseits und dem Akustiksignal andererseits zu bestimmen. Erfindungsgemäß ist es hierbei insbesondere vorgesehen, dass oberhalb eines bestimmten, vorgegebenen Wertes bzw. Grades der Übereinstimmung von Akustiksignal und Mustersignal der angesprochene Vergleich als positiv angesehen wird bzw. das Vergleichsergebnis positiv ist. Erfindungsgemäß wird der Bestimmung der Übereinstimmung bzw. der Ähnlichkeit von Mustersignal und Akustiksignal insbesondere ein skalarer Wert zugeordnet, beispielsweise zwischen 0 und 1, wobei beispielsweise ein Wert von 1,0 einer vollständigen Übereinstimmung von Mustersignal und Akustiksignal entspricht und ein Wert von 0,0 einer vollständigen Unähnlichkeit von Mustersignal und Akustiksignal entspricht, wobei beispielsweise bei einem skalaren Wert des Ergebnisses der Korrelationsberechnung von größer oder gleich 0,5 von einem positiven Vergleich von Mustersignal und Akustiksignal ausgegangen wird. Alternativ hierzu ist es erfindungsgemäß auch möglich das ein höherer oder auch ein niedrigerer skalarer Wert als Schranke bzw. Schwellenwert herangezogen wird, beispielsweise lediglich bei einem Wert des Ergebnisses der Korrelationsberechnung von größer oder gleich 0,7 (oder bereits bei einem Wert des Ergebnisses der Korrelationsberechnung von größer als 0,3) wird von einem positiven Ausgang des Vergleichs ausgegangen. Erfindungsgemäß ist es insbesondere bevorzugt, wenn die Bestimmung der Übereinstimmung bzw. der Ähnlichkeit von Mustersignal und Akustiksignal dadurch beeinflussbar ist, dass die zu erreichende Schranke bzw. der zu erreichende Schwellenwert, ab dem bzw. ab der von einem positiven Vergleich von Mustersignal und Akustiksignal ausgegangen wird, durch einen Benutzer einstellbar bzw. veränderbar ist. Hierdurch ist es erfindungsgemäß möglich, die erfindungsgemäße Vorrichtung besonders flexibel und an unterschiedliche Einsatzszenarien angepasst zu verwenden.

Ferner ist es erfindungsgemäß besonders bevorzugt, dass in der Speichereinrichtung ein weiteres Mustersignal eines weiteren akustischen Signals hinterlegt ist, wobei dem weiteren Mustersignal eine weitere Darstellungsinformation zugeordnet ist, wobei die Steuereinheit derart konfiguriert ist, dass sie das Steuersignal in Abhängigkeit eines Vergleichs des Akustiksignals mit dem Mustersignal und/oder mit dem weiteren Mustersignal generiert, wobei
-- die Vorrichtung derart konfiguriert ist, dass - in Abhängigkeit des Steuersignals - bei positivem Vergleich des Akustiksignals mit dem Mustersignal auf der Anzeigeeinrichtung die Darstellungsinformation oder bei positivem Vergleich des Akustiksignals mit dem weiteren Mustersignal die weitere Darstellungsinformation angezeigt wird,
   und
-- die Vorrichtung derart konfiguriert ist, dass in Abhängigkeit des Steuersignals bei positivem Vergleich des Akustiksignals mit dem Mustersignal die Darstellungsinformation oder bei positivem Vergleich des Akustiksignals mit dem weiteren Mustersignal die weitere Darstellungsinformation in einer zur Ausgabe mittels eines Untertitelgenerators angepassten Art ausgegeben wird.

Mit dem erfindungsgemäßen Verfahren und dem erfindungsgemäßen System ist es hierdurch vorteilhaft möglich, dass neben der Prüfung auf Übereinstimmung (bzw. ausreichender Korrelation) mit dem Mustersignal eine Prüfung auf Übereinstimmung (bzw. ausreichender Korrelation) mit einem weiteren Mustersignal vorgenommen werden kann. Hierdurch ist es erfindungsgemäß vorteilhaft möglich, dass eine höhere Flexibilität beim Betrieb der erfindungsgemäßen Vorrichtung erzielbar ist.

Erfindungsgemäß ist es insbesondere besonders vorteilhaft, wenn neben dem Mustersignal und dem weiteren Mustersignal ferner noch eine über zwei Mustersignale hinausgehende Zahl an Mustersignalen vorgesehen sein können, insbesondere 3, 4, 5, 6, 7, 8, 9, 10, 15, 16, 20, 24, 30, 32 verschiedene Mustersignale. Hierdurch ist es erfindungsgemäß vorteilhaft möglich, dass eine Vielzahl verschiedener Mustersignale zu einer potentiell genaueren Erkennung bzw. präziseren Erkennbarkeit oder auch Detektierbarkeit solcher akustischer Ereignisse im Umfeld der erfindungsgemäßen Vorrichtung führt, mit denen ein Benutzer der erfindungsgemäßen Vorrichtung eine Aktion bzw. die Darstellung einer Information verbinden möchte. Insbesondere ist es erfindungsgemäß auch vorteilhaft möglich, dass eine Mehrzahl verschiedener Mustersignale in der Speichereinrichtung bei der Herstellung der Vorrichtung (d.h. "ab Werk") hinterlegt sind (beispielsweise verschiedene typische Klingeltöne von Hausklingeln oder einen anderen Satz akustischer Ereignisse die typischerweise mit einem bestimmten Typ von Ereignis verknüpft sind, etwa häufig benutzte Telefonklingeltöne oder dergleichen) und dass weitere Speicherplätze bzw. weiterer Speicherplatz in der (der Vorrichtung zugeordneten oder in die Vorrichtung integrierten) Speichereinrichtung für durch den Benutzer einzuspeichernde Mustersignale vorgesehen sind bzw. ist.

Erfindungsgemäß ist es weiterhin bevorzugt, dass die Steuereinheit derart konfiguriert ist, dass das Akustiksignal als Sprachsignal erkannt wird.

Erfindungsgemäß ist es ferner auch bevorzugt, dass die Steuereinheit derart konfiguriert ist, dass das Akustiksignal als Geräuschsignal erkannt wird.

Hierdurch ist es erfindungsgemäß vorteilhaft möglich, dass eine Vielzahl verschiedener Typen von Akustiksignalen als Mustersignale einspeicherbar sind.

Weiterhin ist es erfindungsgemäß bevorzugt, dass die Datenschnittstelle eine drahtgebundene Standardschnittstelle, insbesondere eine USB-Schnittstelle (Universal Serial Bus Schnittstelle) ist.

Erfindungsgemäß ist es weiterhin bevorzugt, dass die Datenschnittstelle eine drahtlose Standardschnittstelle in Form einer Standardfunkschnittstelle, insbesondere eine Bluetooth-Schnittstelle, eine drahtlose USB-Schnittstelle (wireless Universal Serial Bus Schnittstelle), oder eine WLAN-Schnittstelle (Wireless Local Area Network Schnittstelle) ist.

Hierdurch ist es erfindungsgemäß vorteilhaft möglich, dass eine universelle Anschließbarkeit der Vorrichtung bzw. eine Informationsübertragung gemäß standardisierter Übertragungsschnittstellen möglich ist.

Ferner ist es erfindungsgemäß auch bevorzugt, dass die Vorrichtung einen ersten Vorrichtungsteil und einen zweiten Vorrichtungsteil umfasst, wobei der erste Vorrichtungsteil die Mikrofoneinrichtung aufweist, wobei der zweite Vorrichtungsteil die Datenschnittstelle aufweist, wobei der erste Vorrichtungsteil eine erste Übertragungsschnittstelle und der zweite Vorrichtungsteil eine zweite Übertragungsschnittstelle aufweist, wobei die erste und zweite Übertragungsschnittstellen derart konfiguriert sind, das Akustiksignal und/oder das Steuersignal vom ersten Vorrichtungsteil zum zweiten Vorrichtungsteil zu übertragen.

Hierdurch ist es erfindungsgemäß vorteilhaft möglich, dass die Mikrofoneinrichtung nicht zwingend räumlich mit der Steuereinheit verbunden sein muss, insbesondere in ein und demselben Gehäuse untergebracht sein muss. Dies führt dazu, dass beispielsweise der erste Vorrichtungsteil in der Nähe einer zu überwachenden Schallquelle (beispielsweise die Haustürklingel oder aber ein Telefon oder beispielsweise auch ein Kleinkind) angeordnet sein kann und die durch die Mikrofoneinrichtung erfassten Schallwellen zum zweiten Vorrichtungsteil zum Zwecke der erfindungsgemäßen Auswertung übertragen werden.

Ein weiterer Gegenstand der vorliegenden Erfindung betrifft ein System mit einer erfindungsgemäßen Vorrichtung gemäß einer der Ausführungsformen der Vorrichtung, wobei das System ein elektrisches Gerät aufweist, wobei das elektrische Gerät eine der Datenschnittstelle der Vorrichtung entsprechende weitere Datenschnittstelle aufweist, wobei das elektrische Gerät eine Anzeigeeinrichtung und einen Untertitelgenerator aufweist, wobei das elektrische Gerät konfiguriert ist, in Abhängigkeit des über die weitere Datenschnittstelle von der Vorrichtung empfangenen Steuersignals eine Untertitelinformation anzuzeigen.

Mittels eines solchen Systems ist es erfindungsgemäß in vorteilhafter Weise möglich, dass bei Erkennen des Mustersignals bzw. eines der Mustersignale die entsprechende Darstellungsinformation am elektrischen Gerät mittels des Untertitelgenerators, d.h. insbesondere in Form eines Untertitels bzw. mehrerer Untertitel, angezeigt wird. Hierdurch ist es erfindungsgemäß insbesondere vorteilhaft möglich, dass trotz einer intensiven bzw. konzentrierten Benutzung des elektrischen Geräts dennoch eine Informationsübermittlung bzw. eine Information bezüglich des zu überwachenden akustischen Ereignisses (bzw. der zu überwachenden akustischen Ereignisse) möglich ist.

Erfindungsgemäß ist es bezüglich des Systems besonders bevorzugt, dass das elektrische Gerät ein Fernsehgerät ist.

Ein weiterer Gegenstand der vorliegenden Erfindung bezieht sich ferner auch auf ein Verfahren gemäß Anspruch 8.

Mittels eines solchen Verfahrens ist es erfindungsgemäß in vorteilhafter Weise möglich, dass ein akustisches Ereignis automatisch erkannt und in einer für den Benutzer komfortablen Art und Weise diesem zu Bewusstsein gebracht werden kann, insbesondere dann, wenn eine größere räumliche Distanz zwischen der zu überwachenden Schallquelle einerseits und dem Ort des elektrischen Geräts vorliegt.

Erfindungsgemäß ist es bezüglich des Verfahrens besonders bevorzugt, dass in der Speichereinrichtung ein weiteres Mustersignal eines weiteren akustischen Signals hinterlegt ist, wobei dem weiteren Mustersignal eine weitere Darstellungsinformation zugeordnet ist, wobei das Steuersignal durch die Steuereinheit in Abhängigkeit eines Vergleichs des Akustiksignals mit dem Mustersignal und/oder mit dem weiteren Mustersignal generiert wird, wobei in Abhängigkeit des Steuersignals
-- bei positivem Vergleich des Akustiksignals mit dem Mustersignal auf der Anzeigeeinrichtung die Darstellungsinformation oder bei positivem Vergleich des Akustiksignals mit dem weiteren Mustersignal die weitere Darstellungsinformation angezeigt wird, und
-- bei positivem Vergleich des Akustiksignals mit dem Mustersignal die Darstellungsinformation oder bei positivem Vergleich des Akustiksignals mit dem weiteren Mustersignal die weitere Darstellungsinformation in einer zur Ausgabe mittels eines Untertitelgenerators angepassten Art ausgegeben wird.

Ferner bezieht sich die vorliegende Erfindung auch auf ein Computerprogram gemäß Anspruch 10, mit Programmcodemitteln, mit deren Hilfe alle Schritte des erfindungsgemäßen Verfahrens durchführbar sind, wenn das Computerprogramm auf einer programmierbaren Einrichtung ausgeführt wird.

Weiterhin ist Gegenstand der vorliegenden Erfindung ein Computerprogrammprodukt gemäß Anspruch 11, mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch eine erste Variante einer erfindungsgemäßen Vorrichtung.
- **Figur 2**: zeigt schematisch ein erfindungsgemäßes System mit einem ersten Ausführungsbeispiel einer zweiten Variante der erfindungsgemäßen Vorrichtung.
- **Figur 3**: zeigt schematisch ein erfindungsgemäßes System mit einem zweiten Ausführungsbeispiel der zweiten Variante der erfindungsgemäßen Vorrichtung.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiten', "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

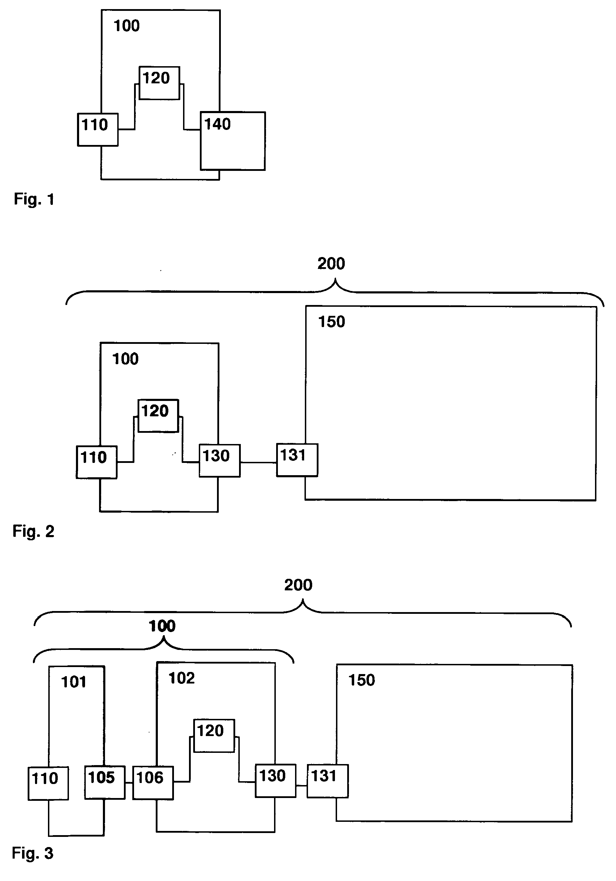

In Figur 1 ist schematisch eine erste Variante einer erfindungsgemäßen Vorrichtung 100 dargestellt. Die erfindungsgemäße Vorrichtung 100 weist gemäß der ersten Variante eine Mikrofoneinrichtung 110, eine Steuereinheit 120 und eine Anzeigeeinrichtung 140 auf. Bei der Anzeigeeinrichtung 140 kann es sich um eine beliebige üblicherweise verwendete Anzeigeeinrichtung eines elektrischen Geräts handeln, beispielsweise eine Flüssigkristallanzeige (LCD-Display, Liquid Crystal Display) und/oder eine TFT-Anzeigeeinrichtung (Thin Film Transistor Display) und/oder eine OLED-Anzeigeeinrichtung (Organic Light Emitting Diode Display), beispielsweise auch in Verbindung mit einer berührungssensitiven Oberfläche als berührungsempfindlicher Bildschirm (sog. Touch-Screen).

Gemäß einer zweiten Variante der erfindungsgemäßen Vorrichtung 100 ist es vorgesehen, dass die Vorrichtung 100 eine Mikrofoneinrichtung 110, eine Steuereinheit 120 und eine Datenschnittstelle 130 aufweist. Bei der Datenschnittstelle 130 kann es sich um eine beliebige, normalerweise gemäß einem Datenübertragungs-Standard funktionierende, Datenschnittstelle handeln, insbesondere eine drahtgebundene Variante einer solchen Datenschnittstelle 130, etwa in Form einer USB-Schnittstelle (Universal Serial Bus), oder eine drahtlose Variante einer solchen Datenschnittstelle 130, etwa in Form einer Bluetooth-Schnittstelle und/oder einer WLAN-Datenschnittstelle (Wireless Local Area Network). Die zweite Variante der erfindungsgemäßen Vorrichtung 100 ist in den Figuren 2 und 3 dargestellt.

In Figur 2 ist schematisch ein erfindungsgemäßes System 200 mit einem ersten Ausführungsbeispiel der zweiten Variante der erfindungsgemäßen Vorrichtung 100 dargestellt. Das erfindungsgemäße System 200 weist die Vorrichtung 100 zur Übertragung und/oder zur Darstellung von Darstellungsinformationen auf. Ferner weist das erfindungsgemäße System 200 ein elektrisches Gerät 150 auf. Das elektrische Gerät 150 weist eine weitere Datenschnittstelle 131 auf, die mit der Datenschnittstelle 130 der Vorrichtung 100 verbindbar ist bzw. mit dieser kompatibel ist.

In Figur 3 ist schematisch ein erfindungsgemäßes System 200 mit einem zweiten Ausführungsbeispiel der zweiten Variante der erfindungsgemäßen Vorrichtung 100 dargestellt. Hier weist ebenfalls das erfindungsgemäße System 200 die Vorrichtung 100 zur Übertragung und/oder zur Darstellung von Darstellungsinformationen sowie das elektrische Gerät 150 auf. Das elektrische Gerät 150 weist auch beim zweiten Ausführungsbeispiel die weitere Datenschnittstelle 131 auf, die mit der Datenschnittstelle 130 der Vorrichtung 100 verbindbar ist bzw. mit dieser kompatibel ist. Bei der zweiten Ausführungsform der zweiten Variante der erfindungsgemäßen Vorrichtung 100 ist es im Unterschied zur ersten Ausführungsform der zweiten Variante der Vorrichtung 100 vorgesehen, dass die Vorrichtung 100 einen ersten Vorrichtungsteil 101 und einen zweiten Vorrichtungsteil 102 umfasst. Der erste Vorrichtungsteil 101 weist die Mikrofoneinrichtung 110 auf und ist mit dem zweiten Vorrichtungsteil 102 über eine Drahtlosverbindung verbunden. Hierzu weist der ersten Vorrichtungsteil 101 eine erste Drahtlosschnittstelle 105 auf und der zweite Vorrichtungsteil 102 eine zweite Drahtlosschnittstelle 106 auf. Die Steuereinheit 120 ist beim dargestellten Ausführungsbeispiel im zweiten Vorrichtungsteil 102 angeordnet. Durch die Realisierung der erfindungsgemäßen Vorrichtung 100 in getrennter Form, d.h. mit dem ersten Vorrichtungsteil 101 und dem zweiten Vorrichtungsteil 102, ist es erfindungsgemäß in vorteilhafter Weise möglich, dass der Ort der Mikrofoneinrichtung 110 unabhängig vom Ort der Steuereinheit 120 gewählt werden kann; insbesondere ist es hierdurch erfindungsgemäß vorteilhaft möglich, dass der ersten Vorrichtungsteil 101 (mit der Mikrofoneinrichtung 110) in unmittelbarer Nähe (oder zumindest in einer größeren räumlichen Nähe) zur Schallquelle angeordnet werden kann, so dass zum einen eine bessere Trennung von möglicherweise ebenfalls vorhandenen anderen akustischen Störquellen erzielbar ist und zum anderen auch eine bessere Erkennungsquote bzw. eine zuverlässigeres Korrelationsergebnis erzielbar ist, so dass insgesamt die Zuverlässigkeit der erfindungsgemäßen Vorrichtung 100 bzw. des erfindungsgemäßen Systems 200 bzw. des erfindungsgemäßen Verfahrens verbessert werden kann. Alternativ zu dem in Figur 3 dargestellten Ausführungsbeispiel mit der Mikrofoneinrichtung 110 im ersten Vorrichtungsteil 101 und der Steuereinheit 120 im zweiten Vorrichtungsteil 102 kann es erfindungsgemäß auch vorgesehen sein, dass sowohl die Mikrofoneinrichtung 110 als auch die Steuereinheit 120 im ersten Vorrichtungsteil 101 angeordnet ist.

Auch für den Fall des in Figur 2 dargestellten ersten Ausführungsbeispiels der zweiten Variante der erfindungsgemäßen Vorrichtung 100 ist es - unter den Voraussetzungen sowohl einer drahtlosen Ausführung der Datenschnittstelle 130 als auch einer ausreichenden Reichweite der Funkverbindung dieser Drahtlosschnittstelle 130 (zur weiteren Datenschnittstelle 131) - ebenfalls möglich dass die Mikrofoneinrichtung 110 in unmittelbarer Nähe (oder zumindest in einer größeren räumlichen Nähe) zur Schallquelle angeordnet werden kann, so dass zum einen eine bessere Trennung von möglicherweise ebenfalls vorhandenen anderen akustischen Störquellen erzielbar ist und zum anderen auch eine bessere Erkennungsquote bzw. eine zuverlässigeres Korrelationsergebnis erzielbar ist, so dass insgesamt die Zuverlässigkeit der erfindungsgemäßen Vorrichtung 100 bzw. des erfindungsgemäßen Systems 200 bzw. des erfindungsgemäßen Verfahrens verbessert werden kann.

Erfindungsgemäß weist die Vorrichtung 100 gemäß sämtlichen Varianten und Ausführungsbeispielen der Erfindung jedenfalls eine Mikrofoneinrichtung 110 und eine Steuereinheit 120 auf. Ferner ist der Vorrichtung 100 eine Speichereinrichtung zumindest zugeordnet, d.h. die Speichereinrichtung ist entweder Teil der Vorrichtung 100 oder Teil der Steuereinheit 120 oder aber die Speichereinrichtung ist der Vorrichtung 100 bzw. der Steuereinheit 120 zugeordnet, d.h. die Speichereinrichtung ist zwar physisch in einer anderen Einheit bzw. Einrichtung angeordnet (beispielsweise in einer anderen über eine drahtgebundene oder drahtlose Datenverbindung angebundene Einrichtung), jedoch hat die Vorrichtung 100 bzw. die Steuereinheit 120 Zugriff auf den Speicherinhalt (bzw. zumindest eines Teils davon) der Speichereinrichtung.

Erfindungsgemäß ist vorgesehen, dass wenigstens ein Mustersignal eines akustischen Signals in der Speichereinrichtung in elektronisch verarbeitbarer Form abgelegt ist, beispielsweise in Form einer Datei oder in Form einer anderweitig organisierten Form eines akustischen Signals, entweder als sogenanntes Mono-Signal (d.h. es existiert lediglich eine einzige Tonspur bzw. ein einzige Tonsignal) oder aber als sogenanntes Stereo-Signal (d.h. es existieren wenigstens zwei (zwar zeitlich korrelierte, jedoch grundsätzlich voneinander unabhängige) Tonspuren bzw. Tonsignale) oder aber als ein Signal mit mehr als zwei Tonspuren.

Mittels der Mikrofoneinrichtung 110 werden relativ zur Vorrichtung 100 externe Schallwellen bzw. Luftschallwellen erfasst. Hierbei handelt es sich bei der Mikrofoneinrichtung 110 typischerweise um eine Mono-Mikrofoneinrichtung, die also in der Lage ist eine Tonspur zu erfassen. Alternativ hierzu ist es auch möglich und erfindungsgemäß bevorzugt, dass es sich bei der Mikrofoneinrichtung 110 entweder um eine integrierte Stereomikrofoneinrichtung, insbesondere mit einer Richtwirkung bzw. Richtcharakteristik, handelt oder aber dass die Mikrofoneinrichtung 110 zwei Mono-Mikrofoneinrichtungen umfasst. Alternativ hierzu kann die Mikrofoneinrichtung 110 auch mehr als zwei Mono-Mikrofoneinrichtungen aufweisen.

Die von der Mikrofoneinrichtung 110 erfassten Schallwellen werden durch die Mikrofoneinrichtung 110 in durch die Steuereinheit 120 auswertbare Akustiksignale umgesetzt bzw. umgewandelt. Hierbei ist es erfindungsgemäß bevorzugt, wenn die durch die Mikrofoneinrichtung 110 generierten Akustiksignale von ihrer Form bzw. Struktur her der Form bzw. der Struktur des in der Speichereinrichtung abgelegten Mustersignals bzw. der in der Speichereinrichtung abgelegten Mustersignale entspricht bzw. korrespondiert, d.h. falls es sich bei dem Mustersignal um ein Mono-Signal handelt, generiert die Mikrofoneinrichtung 110 bevorzugt ein Mono-Signal; falls es sich bei dem Mustersignal um ein Stereo-Signal handelt, generiert die Mikrofoneinrichtung 110 bevorzugt ein Stereo-Signal, etc.

Das Mustersignal muss bzw. die Mustersignale müssen vor einem operativen Betrieb der erfindungsgemäßen Vorrichtung 100 bzw. des erfindungsgemäßen Systems 200 bzw. vor einer Durchführung des erfindungsgemäßen Verfahrens in der Speichereinrichtung hinterlegt sein. Dies kann erfindungsgemäß entweder dadurch erfolgen, dass entweder
-- alle Speichermöglichkeiten der Speichereinrichtung bereits bei der Herstellung bzw. Konfiguration ab Werk der Vorrichtung 100 belegt bzw. vorbestimmt sind oder
-- lediglich ein Teil der Speichermöglichkeiten der Speichereinrichtung bereits bei der Herstellung bzw. Konfiguration ab Werk der Vorrichtung 100 belegt bzw. vorbestimmt sind und ein anderer Teil der Speichermöglichkeiten der Speichereinrichtung durch den Benutzer bestimmbar ist bzw. sind oder
-- alle Speichermöglichkeiten der Speichereinrichtung durch den Benutzer bestimmbar ist bzw. sind.

In der Speichereinrichtung ist neben dem Mustersignal bevorzugt ein weiteres Mustersignal eines weiteren akustischen Signals hinterlegt. Dem Mustersignal ist eine Darstellungsinformation zugeordnet. Im Allgemeinen ist dem weiteren Mustersignal eine weitere Darstellungsinformation zugeordnet. Es kann erfindungsgemäß jedoch auch vorgesehen sein, dass entweder die Darstellungsinformation und die weitere Darstellungsinformation identisch ist oder aber (was auf das gleiche Resultat hinausläuft) dass die Darstellungsinformation sowohl dem Mustersignal als auch dem weiteren Mustersignal zugeordnet ist, d.h. also eine Mehrzahl von Mustersignalen einer (einzigen) Darstellungsinformation zugeordnet sind (und womöglich wiederum ein anderes Mustersignal (oder auch eine Mehrzahl von anderen Mustersignalen) einer anderen Darstellungsinformation zugeordnet ist (bzw. sind)).

Die Steuereinheit 120 ist erfindungsgemäß derart konfiguriert, dass sie ein Steuersignal in Abhängigkeit eines Vergleichs des Akustiksignals mit dem Mustersignal und/oder mit dem weiteren Mustersignal generiert, wobei
-- die Vorrichtung 100 derart konfiguriert ist, dass - in Abhängigkeit des Steuersignals - bei positivem Vergleich des Akustiksignals mit dem Mustersignal auf der Anzeigeeinrichtung 140 die Darstellungsinformation bzw. bei positivem Vergleich des Akustiksignals mit dem weiteren Mustersignal die weitere Darstellungsinformation angezeigt wird, und
-- die Vorrichtung 100 derart konfiguriert ist, dass in Abhängigkeit des Steuersignals bei positivem Vergleich des Akustiksignals mit dem Mustersignal die Darstellungsinformation bzw. bei positivem Vergleich des Akustiksignals mit dem weiteren Mustersignal die weitere Darstellungsinformation in einer zur Ausgabe mittels eines Untertitelgenerators angepassten Art ausgegeben wird, d.h. über die Datenschnittstelle 130 und die weitere Datenschnittstelle 131 zum elektrischen Gerät 150. Im letztgenannten Fall wird die Darstellungsinformation bzw. die weitere Darstellungsinformation auf einer Anzeigeeinrichtung des elektrischen Geräts 150 angezeigt, insbesondere als eine Untertitelinformation.

Mit dem erfindungsgemäßen Verfahren und dem erfindungsgemäßen System ist es in vorteilhafter Weise möglich, dass neben der Prüfung auf Übereinstimmung (bzw. ausreichender Korrelation) mit dem Mustersignal eine Prüfung auf Übereinstimmung (bzw. ausreichender Korrelation) mit einem weiteren Mustersignal vorgenommen werden kann. Hierdurch ist es erfindungsgemäß vorteilhaft möglich, dass eine höhere Flexibilität beim Betrieb der erfindungsgemäßen Vorrichtung erzielbar ist. Erfindungsgemäß ist es insbesondere besonders vorteilhaft, wenn neben dem Mustersignal und dem weiteren Mustersignal ferner noch eine über zwei Mustersignale hinausgehende Zahl an Mustersignalen vorgesehen sind. Hierdurch ist es erfindungsgemäß vorteilhaft möglich, dass eine Vielzahl verschiedener Mustersignale zu einer potentiell genaueren Erkennung bzw. präziseren Erkennbarkeit oder auch Detektierbarkeit solcher akustischer Ereignisse im Umfeld der erfindungsgemäßen Vorrichtung führt, mit denen ein Benutzer der erfindungsgemäßen Vorrichtung eine Aktion bzw. die Darstellung einer Information verbinden möchte.

Erfindungsgemäß ist es vorgesehen, dass bei Vorliegen einer Mehrzahl an Mustersignalen in der Speichereinrichtung das Akustiksignal mit einer Mehrzahl an Mustersignalen verglichen wird und bevorzugt mit allen eingespeicherten Mustersignalen verglichen wird und dass dasjenige Mustersignal als erkannt gilt, das den höchsten Korrelationswert erreicht und zusätzlich bezüglich des Korrelationswerts einen vorgegebenen Schrankenwert bzw. Schwellenwert erreicht bzw. übertrifft.

Eine Überprüfung bzw. ein Vergleich des Akustiksignals mit dem Mustersignal wird erfindungsgemäß insbesondere mittels einer Korrelationsberechnung durchgeführt. Hierdurch ist es erfindungsgemäß vorteilhaft möglich, den Grad der Übereinstimmung bzw. einen Ähnlichkeitsgrad zwischen dem Mustersignal einerseits und dem Akustiksignal andererseits zu bestimmen. Erfindungsgemäß ist es hierbei insbesondere vorgesehen, dass oberhalb eines bestimmen, vorgegebenen Wertes bzw. Grades der Übereinstimmung von Akustiksignal und Mustersignal der angesprochene Vergleich als positiv angesehen wird bzw. das Vergleichsergebnis positiv ist.

Erfindungsgemäß wird der Bestimmung der Übereinstimmung bzw. der Ähnlichkeit von Mustersignal und Akustiksignal insbesondere ein skalarer Wert zugeordnet, beispielsweise zwischen 0 und 1, wobei beispielsweise ein Wert von 1,0 einer vollständigen Übereinstimmung von Mustersignal und Akustiksignal entspricht und ein Wert von 0,0 einer vollständigen Unähnlichkeit von Mustersignal und Akustiksignal entspricht.

Erfindungsgemäß muss der skalare Korrelationswert einen vorgegebenen Schwellenwert mindestens erreichen bzw. übertreffen, beispielsweise größer als oder gleich 0,5 oder aber größer als oder gleich 0,7 oder aber größer als oder gleich 0,3. Erfindungsgemäß ist es insbesondere bevorzugt, wenn die Bestimmung der Übereinstimmung bzw. der Ähnlichkeit von Mustersignal und Akustiksignal dadurch beeinflussbar ist, dass die zu erreichende Schranke bzw. der zu erreichende Schwellenwert, ab dem bzw. ab der von einem positiven Vergleich von Mustersignal und Akustiksignal ausgegangen wird, durch einen Benutzer einstellbar bzw. veränderbar ist. Hierdurch ist es erfindungsgemäß möglich, die erfindungsgemäße Vorrichtung besonders flexibel und an unterschiedliche Einsatzszenarien angepasst zu verwenden.

## Patentansprüche

1. Vorrichtung (100) zur Übertragung und zur Darstellung von Darstellungsinformationen, wobei die Vorrichtung mindestens eine Mikrofoneinrichtung (110) und eine Steuereinheit (120) aufweist, wobei die Mikrofoneinrichtung (110) so konfiguriert ist, dass sie externe Schallwellen in ein durch die Steuereinheit (120) auswertbares Akustiksignal umsetzt, wobei in einer der Vorrichtung (100) wenigstens zugeordneten Speichereinrichtung (121) ein Mustersignal eines akustischen Signals hinterlegt ist, wobei die Steuereinheit (120) derart konfiguriert ist, dass sie in Abhängigkeit des Akustiksignals und in Abhängigkeit eines Vergleichs des Akustiksignals mit dem Mustersignal ein Steuersignal generiert, wobei dem Mustersignal eine Darstellungsinformation zugeordnet ist, wobei
-- die Vorrichtung (100) eine Anzeigeeinrichtung umfasst und die Vorrichtung (100) derart konfiguriert ist, dass in Abhängigkeit des Steuersignals bei positivem Vergleich des Akustiksignals mit dem Mustersignal auf der Anzeigeeinrichtung die Darstellungsinformation angezeigt wird,
und
-- die Vorrichtung (100) eine Datenschnittstelle (130) aufweist und die Vorrichtung (100) derart konfiguriert ist, dass in Abhängigkeit des Steuersignals bei positivem Vergleich des Akustiksignals mit dem Mustersignal die Darstellungsinformation in einer zur Ausgabe mittels eines Untertitelgenerators angepassten Art ausgegeben wird, wobei
die Speichereinrichtung physisch in einer anderen Einheit angeordnet ist und die Steuereinheit (120) Zugriff auf zumindest einen Teil eines Speicherinhalts der Speichereinrichtung hat,
wobei die Steuereinheit (120) derart konfiguriert ist, dass das Akustiksignal als Sprachsignal oder als Geräuschsignal erkannt wird,
wobei eine Mehrzahl verschiedener Mustersignale in der Speichereinrichtung bei der Herstellung der Vorrichtung (100) hinterlegt sind und weiterer Speicherplatz in der Speichereinrichtung für durch einen Benutzer der Vorrichtung (100) einzuspeichernde Mustersignale vorgesehen ist, **dadurch gekennzeichnet, dass**
die Vorrichtung (100) derart konfiguriert ist, dass eine Bestimmung einer Übereinstimmung von Mustersignal und Akustiksignal dadurch beeinflussbar ist, dass ein zu erreichender Schwellenwert, ab dem von einem positiven Vergleich von Mustersignal und Akustiksignal ausgegangen wird, durch den Benutzer einstellbar ist.

2. Vorrichtung nach Anspruch 1, **dadurch gekennzeichnet, dass** in der Speichereinrichtung (121) ein weiteres Mustersignal eines weiteren akustischen Signals hinterlegt ist, wobei dem weiteren Mustersignal eine weitere Darstellungsinformation zugeordnet ist, wobei die Steuereinheit (120) derart konfiguriert ist, dass sie das Steuersignal in Abhängigkeit eines Vergleichs des Akustiksignals mit dem Mustersignal und/oder mit dem weiteren Mustersignal generiert, wobei
-- die Vorrichtung (100) derart konfiguriert ist, dass - in Abhängigkeit des Steuersignals - bei positivem Vergleich des Akustiksignals mit dem Mustersignal auf der Anzeigeeinrichtung die Darstellungsinformation oder bei positivem Vergleich des Akustiksignals mit dem weiteren Mustersignal die weitere Darstellungsinformation angezeigt wird,
und
-- die Vorrichtung (100) derart konfiguriert ist, dass in Abhängigkeit des Steuersignals bei positivem Vergleich des Akustiksignals mit dem Mustersignal die Darstellungsinformation oder bei positivem Vergleich des Akustiksignals mit dem weiteren Mustersignal die weitere Darstellungsinformation in einer zur Ausgabe mittels eines Untertitelgenerators angepassten Art ausgegeben wird.

3. Vorrichtung nach einem der vorhergehenden Ansprüche, **dadurch gekennzeichnet, dass** die Datenschnittstelle (130) eine drahtgebundene Standardschnittstelle, insbesondere eine USB-Schnittstelle (Universal Serial Bus Schnittstelle) ist.

4. Vorrichtung (100) nach einem der vorhergehenden Ansprüche, **dadurch gekennzeichnet, dass** die Datenschnittstelle (130) eine drahtlose Standardschnittstelle in Form einer Standardfunkschnittstelle, insbesondere eine Bluetooth-Schnittstelle, eine drahtlose USB-Schnittstelle (wireless Universal Serial Bus Schnittstelle), oder eine WLAN-Schnittstelle (Wireless Local Area Network Schnittstelle) ist.

5. Vorrichtung (100) nach einem der vorhergehenden Ansprüchen, **dadurch gekennzeichnet, dass** die Vorrichtung einen ersten Vorrichtungsteil (101) und einen zweiten Vorrichtungsteil (102) umfasst, wobei der erste Vorrichtungsteil (101) die Mikrofoneinrichtung (110) aufweist, wobei der zweite Vorrichtungsteil (102) die Datenschnittstelle (130) aufweist, wobei der erste Vorrichtungsteil (101) eine erste Übertragungsschnittstelle (105) und der zweite Vorrichtungsteil (102) eine zweite Übertragungsschnittstelle (106) aufweist, wobei die erste und zweite Übertragungsschnittstellen (105, 106) derart konfiguriert sind, das Akustiksignal und/oder das Steuersignal vom ersten Vorrichtungsteil (101) zum zweiten Vorrichtungsteil (102) zu übertragen.

6. System (200) mit einer Vorrichtung (100) gemäß einem der vorhergehenden Ansprüche, wobei das System (200) ein elektrisches Gerät (150) aufweist, wobei das elektrische Gerät (150) eine der Datenschnittstelle (130) der Vorrichtung (100) entsprechende weitere Datenschnittstelle (131) aufweist, wobei das elektrische Gerät (150) eine Anzeigeeinrichtung und einen Untertitelgenerator aufweist, wobei das elektrische Gerät (150) konfiguriert ist, in Abhängigkeit des über die weitere Datenschnittstelle (131) von der Vorrichtung (100) empfangenen Steuersignals eine Untertitelinformation anzuzeigen.

7. System (200) nach Anspruch 6, **dadurch gekennzeichnet, dass** das elektrische Gerät (150) ein Fernsehgerät ist.

8. Verfahren zur Übertragung und zur Darstellung von Darstellungsinformationen, wobei eine Vorrichtung (100) wenigstens eine Mikrofoneinrichtung (110) und eine Steuereinheit (120) aufweist, wobei durch die Mikrofoneinrichtung (110) externe Schallwellen in ein durch die Steuereinheit (120) auswertbares Akustiksignal umgesetzt werden, wobei in einer der Vorrichtung (100) wenigstens zugeordneten und physisch in einer anderen Einheit angeordneten Speichereinrichtung (121) ein Mustersignal eines akustischen Signals hinterlegt ist, wobei die Steuereinheit (120) Zugriff auf zumindest einen Teil eines Speicherinhalts der Speichereinrichtung hat, wobei die Steuereinheit (120) in Abhängigkeit des Akustiksignals und in Abhängigkeit eines Vergleichs des Akustiksignals mit dem Mustersignal ein Steuersignal generiert, wobei dem Mustersignal eine Darstellungsinformation zugeordnet ist, wobei
-- die Vorrichtung (100) eine Anzeigeeinrichtung umfasst und in Abhängigkeit des Steuersignals bei positivem Vergleich des Akustiksignals mit dem Mustersignal auf der Anzeigeeinrichtung die Darstellungsinformation angezeigt wird,
und
-- die Vorrichtung (100) eine Datenschnittstelle (130) aufweist und in Abhängigkeit des Steuersignals bei positivem Vergleich des Akustiksignals mit dem Mustersignal die Darstellungsinformation in einer zur Ausgabe mittels eines Untertitelgenerators angepassten Art ausgegeben wird, wobei die Darstellungsinformation über die Datenschnittstelle (130) der Vorrichtung (100) übertragen wird, wobei ein elektrisches Gerät (150) eine der Datenschnittstelle (130) der Vorrichtung (100) entsprechende weitere Datenschnittstelle (131) aufweist, wobei das elektrische Gerät (150) eine Anzeigeeinrichtung und einen Untertitelgenerator aufweist, wobei in Abhängigkeit der über die weitere Datenschnittstelle (131) von der Vorrichtung (100) empfangenen Darstellungsinformation eine Untertitelinformation auf der Anzeigeeinrichtung des elektrischen Geräts angezeigt wird,
wobei das Akustiksignal als Sprachsignal oder als Geräuschsignal von der Steuereinheit (120) erkannt wird
wobei eine Mehrzahl verschiedener Mustersignale in der Speichereinrichtung bei der Herstellung der Vorrichtung (100) hinterlegt werden und weiterer Speicherplatz in der Speichereinrichtung für durch einen Benutzer der Vorrichtung (100) einzuspeichernde Mustersignale bereitgestellt wird,
wobei eine Bestimmung einer Übereinstimmung von Mustersignal und Akustiksignal dadurch beeinflusst wird, dass ein zu erreichender Schwellenwert, ab dem von einem positiven Vergleich von Mustersignal und Akustiksignal ausgegangen wird, durch den Benutzer eingestellt wird.

9. Verfahren nach Anspruch 8, **dadurch gekennzeichnet, dass** in der Speichereinrichtung (121) ein weiteres Mustersignal eines weiteren akustischen Signals hinterlegt ist, wobei dem weiteren Mustersignal eine weitere Darstellungsinformation zugeordnet ist, wobei das Steuersignal durch die Steuereinheit (120) in Abhängigkeit eines Vergleichs des Akustiksignals mit dem Mustersignal und/oder mit dem weiteren Mustersignal generiert wird, wobei in Abhängigkeit des Steuersignals
-- bei positivem Vergleich des Akustiksignals mit dem Mustersignal auf der Anzeigeeinrichtung die Darstellungsinformation oder bei positivem Vergleich des Akustiksignals mit dem weiteren Mustersignal die weitere Darstellungsinformation angezeigt wird,
und
-- bei positivem Vergleich des Akustiksignals mit dem Mustersignal die Darstellungsinformation oder bei positivem Vergleich des Akustiksignals mit dem weiteren Mustersignal die weitere Darstellungsinformation in einer zur Ausgabe mittels eines Untertitelgenerators angepassten Art ausgegeben wird.

10. Computerprogramm mit Programmcodemitteln, mit deren Hilfe die Schritte eines Verfahrens nach Anspruch 8 oder 9 durchführbar sind, wenn das Computerprogramm auf einer programmierbaren Einrichtung ausgeführt wird.

11. Computerprogrammprodukt mit einem computerlesbaren Medium und einem auf dem computerlesbaren Medium gespeicherten Computerprogramm mit Programmcodemitteln, die dazu geeignet sind, dass die Schritte eines Verfahrens nach Anspruch 8 oder 9 durchführbar sind, wenn das Computerprogramm auf einer programmierbaren Einrichtung ausgeführt wird.

## Claims

1. Device (100) for transmitting and displaying display information, the device comprising at least a microphone means (110) and a control unit (120), the microphone means (110) being configured in such a way that it converts external sound waves into an acoustic signal evaluable by the control unit (120), a sample signal of an acoustic signal being stored in a storage means (121) which is at least assigned to the device (100), the control unit (120) being configured in such a way that it generates a control signal as a function of the acoustic signal and as a function of a comparison of the acoustic signal with the sample signal, a piece of display information being assigned to the sample signal,
- the device (100) comprising a representation means, and the device (100) being configured in such a way that, as a function of the control signal, the display information is represented on the representation means in the event of a positive comparison of the acoustic signal with the sample signal,
and
- the device (100) comprising a data interface (130), and the device (100) being configured in such a way that, as a function of the control signal, the display information is outputted in a manner adapted to output by means of a subtitle generator in the event of a positive comparison of the acoustic signal with the sample signal,
the storage means being physically arranged in another unit, and the control unit (120) having access to at least part of a storage content of the storage means,
the control unit (120) being configured in such a way that the acoustic signal is recognised as a speech signal or as a noise signal,
a plurality of different sample signals being stored in the storage means when the device (100) is manufactured, and further storage space being provided in the storage means for sample signals to be stored by a user of the device (100),
**characterised in that** the device (100) is configured in such a way that a determination of a correspondence between the sample signal and the acoustic signal can be influenced **in that** a threshold to be achieved, starting from which a positive comparison between the sample signal and the acoustic signal is assumed, can be set by the user.

2. Device according to claim 1, **characterised in that** a further sample signal of a further acoustic signal is stored in the storage means (121), a further piece of display information being assigned to the further sample signal, the control unit (120) being configured in such a way that it generates the control signal as a function of a comparison of the acoustic signal with the sample signal and/or with the further sample signal,
- the device (100) being configured in such a way that, as a function of the control signal, the display information, in the event of a positive comparison of the acoustic signal with the sample signal, or the further display information, in the event of a positive comparison of the acoustic signal with the further sample signal, is represented on the representation means
and
- the device (100) being configured in such a way that, as a function of the control signal, the display information, in the event of a positive comparison of the acoustic signal with the sample signal, or the further display information, in the event of a positive comparison of the acoustic signal with the further sample signal, is outputted in a manner adapted to output by means of a subtitle generator.

3. Device according to either of the preceding claims, **characterised in that** the data interface (130) is a wired standard interface, in particular a USB interface (universal serial bus interface).

4. Device (100) according to any of the preceding claims, **characterised in that** the data interface (130) is a wireless standard interface in the form of a standard radio interface, in particular a Bluetooth interface, a wireless USB interface (wireless universal serial bus interface) or a WLAN interface (wireless local area network interface).

5. Device (100) according to any of the preceding claims, **characterised in that** the device comprises a first device part (101) and a second device part (102), the first device part (101) comprising the microphone means (110), the second device part (102) comprising the data interface (130), the first device part (101) comprising a first transmission interface (105) and the second device (102) comprising a second transmission interface (106), the first and second transmission interfaces (105, 106) being configured so as to transmit the acoustic signal and/or the control signal from the first device part (101) to the second device part (102).

6. System (200) comprising a device (100) according to any of the preceding claims, the system (200) comprising an electrical appliance (150), the electrical appliance (150) comprising a further data interface (131) corresponding to the data interface (130) of the device (100), the electrical appliance (150) comprising a display means and a subtitle generator, the electrical appliance (150) being configured to represent a piece of subtitle information as a function of the control signal received from the device (100) via the further data interface (131).

7. System according to claim 6, **characterised in that** the electrical appliance (150) is a television set.

8. Method for transmitting and displaying display information, a device (100) comprising at least a microphone means (110) and a control unit (120), the microphone means (110) converting external sound waves into an acoustic signal evaluable by the control unit (120), a sample signal of an acoustic signal being stored in a storage means (121) which is at least assigned to the device (100) and physically arranged in another unit, the control unit (120) having access to at least part of a storage content of the storage means, the control unit (120) generating a control signal as a function of the acoustic signal and as a function of a comparison of the acoustic signal with the sample signal, a piece of display information being assigned to the sample signal,
- the device (100) comprising a representation means, and, as a function of the control signal, the display information being represented on the representation means in the event of a positive comparison of the acoustic signal with the sample signal,
and
- the device (100) comprising a data interface (130), and, as a function of the control signal, the display information being outputted in a manner adapted to output by means of a subtitle generator in the event of a positive comparison of the acoustic signal with the sample signal, the display information being transmitted via the data interface (130) of the device (100), an electrical appliance (150) comprising a further data interface (131) corresponding to the data interface (130) of the device (100), the electrical appliance (150) comprising a display means and a subtitle generator, subtitle information being represented on the representation means of the electrical appliance as a function of the display information received from the device (100) via the further data interface (131),
the acoustic signal being recognised as a speech signal or as a noise signal by the control unit (120),
a plurality of different sample signals being stored in the storage means when the device (100) is manufactured, and further storage space being provided in the storage means for sample signals to be stored by a user of the device (100),
a determination of a correspondence between the sample signal and the acoustic signal being influenced in that a threshold to be achieved, starting from which a positive comparison between the sample signal and the acoustic signal is assumed, can be set by the user.

9. Method according to claim 8, **characterised in that** a further sample signal of a further acoustic signal is stored in the storage means (121), a further piece of display information being assigned to the further sample signal, the control unit (120) generating the control signal as a function of a comparison of the acoustic signal with the sample signal and/or with the further sample signal, and, as a function of the control signal,
- the display information, in the event of a positive comparison of the acoustic signal with the sample signal, or the further display information, in the event of a positive comparison of the acoustic signal with the further sample signal, being represented on the representation means
and
- the display information, in the event of a positive comparison of the acoustic signal with the sample signal, or the further display information, in the event of a positive comparison of the acoustic signal with the further sample signal, being outputted in a manner adapted to output by means of a subtitle generator.

10. Computer program comprising program code means by means of which the steps of a method according to either claim 8 or claim 9 can be carried out when the computer program is run on a programmable means.

11. Computer program product comprising a computer-readable medium and a computer program stored on the computer-readable medium and comprising program code means suitable for the steps of a method according to either claim 8 or claim 9 to be able to be carried out when the computer program is run on a programmable means.

## Revendications

1. Dispositif (100) de transmission et de représentation d'informations de représentation, dans lequel le dispositif présente au moins un moyen de microphone (110) et une unité de commande (120), dans lequel le moyen de microphone (110) est configuré de manière à ce qu'il convertisse des ondes sonores externes en un signal acoustique évaluable par l'unité de commande (120), dans lequel un signal modèle d'un signal acoustique est mémorisé dans un moyen de mémorisation (121) au moins attribué au dispositif (100), dans lequel l'unité de commande (120) est configurée de manière à ce qu'elle génère un signal de commande en fonction du signal acoustique et en fonction d'une comparaison du signal acoustique avec le signal modèle, dans lequel une information de représentation est attribuée au signal modèle,
- dans lequel le dispositif (100) comprend un moyen d'affichage et dans lequel le dispositif (100) est configuré de manière à ce que l'information de représentation soit affichée sur le moyen d'affichage en fonction du signal de commande, lors de la comparaison positive du signal acoustique avec le signal modèle,
et
- dans lequel le dispositif (100) présente une interface de données (130) et dans lequel le dispositif (100) est configuré de manière à ce qu'en fonction du signal de commande, l'information de représentation, lors de la comparaison positive du signal acoustique avec le signal modèle, soit émise d'une manière adaptée à l'émission au moyen d'un générateur de sous-titres,
dans lequel le moyen de mémorisation est physiquement disposé dans une autre unité, et dans lequel l'unité de commande (120) a accès à au moins une partie d'un contenu de mémoire du moyen de mémorisation,
dans lequel l'unité de commande (120) est configurée de manière à ce que le signal acoustique soit identifié comme signal de parole ou comme signal de bruit,
dans lequel une pluralité de différents signaux modèle sont mémorisés dans le moyen de mémorisation lors de la fabrication du dispositif (100) et dans lequel un espace mémoire supplémentaire est ménagé dans le moyen de mémorisation pour des signaux modèle à mémoriser par un utilisateur du dispositif (100),
**caractérisé en ce que** le dispositif (100) est configuré de manière à ce qu'une détermination d'une concordance du signal modèle et du signal acoustique soit influençable du fait qu'une valeur seuil à obtenir, à partir de laquelle on part d'une comparaison positive du signal modèle et du signal acoustique, soit réglable par l'utilisateur.

2. Dispositif selon la revendication 1, **caractérisé en ce qu'**un signal modèle supplémentaire d'un signal acoustique supplémentaire est mémorisé dans le moyen de mémorisation (121), dans lequel une information de représentation supplémentaire est attribuée au signal modèle supplémentaire, dans lequel l'unité de commande (120) est configurée de manière à ce qu'elle génère le signal de commande en fonction d'une comparaison du signal acoustique avec le signal modèle et/ou avec le signal modèle supplémentaire, dans lequel
- le dispositif (100) est configuré de manière à ce, qu'en fonction du signal de commande, lors de la comparaison positive du signal acoustique avec le signal modèle, l'information de représentation soit affichée sur le moyen d'affichage ou, lors de la comparaison positive du signal acoustique avec le signal modèle supplémentaire, que l'information de représentation supplémentaire soit affichée sur le moyen d'affichage,
et
- dans lequel le dispositif (100) est configuré de manière à ce qu'en fonction du signal de commande, lors de la comparaison positive du signal acoustique avec le signal modèle, l'information de représentation soit émise d'une manière adaptée à l'émission au moyen d'un générateur de sous-titres, ou, lors de lors de la comparaison positive du signal acoustique avec le signal modèle supplémentaire, que l'information de représentation supplémentaire soit émise d'une manière adaptée à l'émission au moyen d'un générateur de sous-titres.

3. Dispositif selon l'une quelconque des revendications précédentes, **caractérisé en ce que** l'interface de données (130) est une interface standard raccordée par fil, notamment une interface USB (interface Universal Serial Bus).

4. Dispositif (100) selon l'une quelconque des revendications précédentes, **caractérisé en ce que** l'interface de données (130) est une interface standard sans fil sous forme d'une interface radio standard, notamment une interface Bluetooth, une interface USB sans fil (interface wireless Universal Serial Bus), ou une interface WLAN (interface Wireless Local Area Network).

5. Dispositif (100) selon l'une quelconque des revendications précédentes, **caractérisé en ce que** le dispositif comprend une première partie de dispositif (101) et une deuxième partie de dispositif (102), dans lequel la première partie de dispositif (101) présente le moyen de microphone (110), dans lequel la deuxième partie de dispositif (102) présente l'interface de données (130), dans lequel la première partie de dispositif (101) présente une première interface de transmission (105), et dans lequel la deuxième partie de dispositif (102) présente une deuxième interface de transmission (106), dans lequel la première et la deuxième interfaces de transmission (105, 106) sont configurées de manière à transmettre le signal acoustique et/ou le signal de commande de la première partie de dispositif (101) à la deuxième partie de dispositif (102).

6. Système (200) comprenant un dispositif (100) selon l'une quelconque des revendications précédentes, dans lequel le système (200) présente un appareil électrique (150), dans lequel l'appareil électrique (150) présente une interface de données supplémentaire (131) correspondant à l'interface de données (130) du dispositif (100), dans lequel l'appareil électrique (150) présente un moyen d'affichage et un générateur de sous-titres, dans lequel l'appareil électrique (150) est configuré pour afficher une information de sous-titre en fonction du signal de commande reçu par le dispositif (100) par l'intermédiaire de l'interface de données supplémentaire (131).

7. Système (200) selon la revendication 6, **caractérisé en ce que** l'appareil électrique (150) est un téléviseur.

8. Procédé de transmission et de représentation d'informations de représentation, dans lequel un dispositif (100) présente au moins un moyen de microphone (110) et une unité de commande (120), dans lequel des ondes sonores externes sont converties au moyen du moyen de microphone (11) en un signal acoustique évaluable par l'unité de commande (120), dans lequel un signal modèle d'un signal acoustique est mémorisé dans un moyen de mémorisation (121) au moins attribué au dispositif (100) et disposé physiquement dans une autre unité, dans lequel l'unité de commande (120) a accès à au moins une partie d'un contenu de mémoire du moyen de mémorisation, dans lequel l'unité de commande (120) génère un signal de commande en fonction du signal acoustique et en fonction d'une comparaison du signal acoustique avec le signal modèle, dans lequel une information de représentation est attribuée au signal modèle, dans lequel
- le dispositif (100) comprend un moyen d'affichage et dans lequel l'information de représentation est affichée sur le moyen d'affichage en fonction du signal de commande, lors de la comparaison positive du signal acoustique avec le signal modèle,
et
- dans lequel le dispositif (100) présente une interface de données (130) et dans lequel l'information de représentation, lors de la comparaison positive du signal acoustique avec le signal modèle, est émise d'une manière adaptée à l'émission au moyen d'un générateur de sous-titres, en fonction du signal de commande, dans lequel l'information de représentation est transmise par l'intermédiaire de l'interface de données (130) du dispositif (100), dans lequel un appareil électrique (150) présente une interface de données supplémentaire (131) correspondant à l'interface de données (130) du dispositif (100), dans lequel l'appareil électrique (150) présente un moyen d'affichage et un générateur de sous-titres, dans lequel une information de sous-titre est affichée sur le moyen d'affichage de l'appareil électrique en fonction de l'information de représentation reçue par l'intermédiaire de l'interface de données supplémentaire (131),
dans lequel le signal acoustique est identifié comme signal de parole ou comme signal de bruit,
dans lequel une pluralité de différents signaux modèle sont mémorisés dans le moyen de mémorisation lors de la fabrication du dispositif (100) et dans lequel un espace mémoire supplémentaire est fourni pour des signaux modèle à mémoriser par un utilisateur du dispositif (100),
dans lequel une détermination d'une concordance du signal modèle et du signal acoustique est influencée du fait qu'une valeur seuil à atteindre, à partir de laquelle on part d'une comparaison positive du signal modèle et du signal acoustique, est réglée par l'utilisateur.

9. Procédé selon la revendication 8, **caractérisé en ce que** ce qu'un signal modèle supplémentaire d'un signal acoustique supplémentaire est mémorisé dans le moyen de mémorisation (121), dans lequel une information de représentation supplémentaire est attribuée au signal modèle supplémentaire, dans lequel le signal de commande est généré par l'unité de commande (120) en fonction d'une comparaison du signal acoustique avec le signal modèle et/ou avec le signal modèle supplémentaire, dans lequel, en fonction du signal de commande,
- lors de la comparaison positive du signal acoustique avec le signal modèle, l'information de représentation est affichée sur le moyen d'affichage ou, lors de la comparaison positive du signal acoustique avec le signal modèle supplémentaire, l'information de représentation supplémentaire est affichée sur le moyen d'affichage,
et dans lequel,
- lors de la comparaison positive du signal acoustique avec le signal modèle, l'information de représentation est émise d'une manière adaptée à l'émission au moyen d'un générateur de sous-titres, ou lors de lors de la comparaison positive du signal acoustique avec le signal modèle supplémentaire, l'information de représentation supplémentaire est emise d'une manière adaptée à l'émission au moyen d'un générateur de sous-titres.

10. Programme d'ordinateur comprenant des moyens de codages de programme, à l'aide desquels les étapes d'un procédé selon la revendication 8 ou 9 sont réalisables lorsque le programme d'ordinateur est exécuté sur un moyen programmable.

11. Produit de programme d'ordinateur comprenant un support lisible par ordinateur et un programme d'ordinateur mémorisé sur le support lisible par ordinateur, doté de moyens de codage de programme, lesquels sont aptes à ce que les étapes d'un procédé selon les revendications 8 ou 9 soient exécutables lorsque le programme d'ordinateur est exécuté sur un moyen programmable.
